Europäisches Patentamt

(19) European Patent Office

Office européen des brevets

(11) Numéro de publication: **0 190 955**

**B1**

(12) **FASCICULE DE BREVET EUROPÉEN**

(45) Date de publication du fascicule du brevet:
04.01.89

(21) Numéro de dépôt: **86400076.5**

(22) Date de dépôt: **15.01.86**

(51) Int. Cl.⁴: **F 16 L 29/00**, F 16 L 37/00,
F 16 L 37/28

㊴ **Prise de distribution de fluides, en particulier pour établissements hospitaliers.**

(30) Priorité: **18.01.85 FR 8500681**

(43) Date de publication de la demande:
**13.08.86 Bulletin 86/33**

(45) Mention de la délivrance du brevet:
**04.01.89 Bulletin 89/1**

(84) Etats contractants désignés:
**AT BE CH DE GB IT LI LU NL SE**

(56) Documents cité:
**FR-A-598 208**
**FR-A-2 323 090**

(73) Titulaire: **DUFFOUR ET IGON S.A. (D.I.), Rue de
l'Oasis, F-31000 Toulouse (FR)**

(72) Inventeur: **Vigneau, Jean- Louis, Montegut
Plantaurel, F-09120 Varilhes (FR)**
Inventeur: **Trenque, Pierre, 1, résidence Le Parc
Avenue des Croisés, F-31520 Ramonville St Agne
(FR)**
Inventeur: **Rivoire, Bruno, 19, rue Bayard, F-31000
Toulouse (FR)**

(74) Mandataire: **Chameroy, Claude, c/o Cabinet
Malemont 42, avenue du Président Wilson,
F-75116 Paris (FR)**

EP 0 190 955 B1

## Description

L'invention porte sur une prise de distribution de fluides composée d'un corps de prise pourvu d'une entrée de fluide et de moyens pour assurer la circulation du fluide entre cette entrée et un embout de prise seulement quand cet embout est introduit dans le corps de prise, qui comprend une chemise dont la chambre arrière peut communiquer avec l'entrée de fluide et dans laquelle coulisse un piston pourvu d'un canal de circulation sous forme d'un trou borgne axial ouvert à l'avant et de perçages radiaux à l'arrière, ce piston étant maintenu par la pression du fluide en position de fermeture, pour laquelle les perçages radiaux sont situés dans la chemise, contre une butée, tandis que l'introduction de l'embout de prise le repousse dans sa position d'ouverture pour laquelle les perçages radiaux débouchent dans la chambre arrière.

Dans ce type de prise connu par exemple d'après le brevet français n° 598 208, dès que l'embout de prise est retiré, toute circulation de fluide est interdite, puisque c'est la pression même du fluide qui déplace le piston pour l'amener dans la position de fermeture pour laquelle les perçages radiaux sont obstrués par la chemise. A l'inverse, l'introduction de l'embout suffit à elle seule à déclencher la circulation du fluide depuis l'entrée et la chambre arrière jusqu'à l'embout lui-même par les perçages radiaux et le trou borgne.

C'est pourquoi ces prises connues sont particulièrement bien adaptées pour être utilisées dans les établissements hospitaliers en tant que prise murale de distribution de fluide lesquelles en effet, pour être conformes aux normes nationales et internationales de plus en plus strictes en la matière, doivent pouvoir être reliées facilement aux canalisations spécifiques amenant sur les lieux d'utilisation les différents fluides necessaires à la dispensation des soins, et doivent impérativement être étanches lorsque l'embout est débranché et éviter toute éjection accidentelle et toute fuite lorsqu'un embout est verrouillé sur la prise.

Toutefois, dans les prises de distribution de fluides connues, telle que celle décrite dans le brevet français n° 598 208, la chemise dans laquelle coulisse le piston est solidaire du corps de prise.

Dans ces conditions, il est difficile, voire même impossible de procéder à des nettoyages fréquents de la prise qui imposent obligatoirement un démontage des pièces internes, et notamment du piston supprimant l'étanchéité réalisée par ce dernier.

La présente invention vise à remédier à cet inconvénient et, pour ce faire, elle propose une prise de distribution de fluide du type précité, qui se caractérise en ce que la chemise coulisse dans un appendice cylindrique du du corps de prise entre une position de securité dans laquelle elle est maintenue par la pression du fluide contre une butée de sécurité et une piston d'ouverture pour laquelle sa chambre communique par des perçages radiaux avec une chambre d'admission du corps, position d'ouverture dans laquelle elle est maintenue par une douille amovible.

De préférence, la douille amovible apte à être traversée par l'embout de prise constitue alors également la butée avant du piston.

Grâce à cette disposition, l'utilisateur dispose de la possibilité de démonter la douille amovible lorsque l'embout de prise n'est pas en position active dans la prise, c'est-à-dire lorsque celle-ci n'est pas utilisée. La chemise coulisse alors dans l'appendice de la prise sous l'effet de la pression du fluide et vient s'appuyer contre la butée de sécurité. Dans cette position, elle interdit la circulation du fluide, et l'utilisateur peut en toute sécurité procéder au nettoyage de la chambre arrière et de la partie cylindrique de la chemise d'une part, ainsi que des pièces qu'il a extraites d'autre part, à savoir le piston et la douille avec leurs accessoires éventuels.

Selon un perfectionnement entrant dans le cadre de l'invention, des joints d'étanchéité sont prévus à l'arrière du piston et de la chemise. Il s'est révélé plus efficace de disposer ces joints sur les pièces mobiles de la prise car de la sorte leur usure est moindre et leur surveillance est plus aisée puisque ces pièces mobiles peuvent être extraites. Avantageusement les perçages radiaux débouchent dans une gorge péripherique.

De telles gorges, qui peuvent être prévues sur le piston, sur la chemise ou sur les deux facilitent la circulation du fluide et évitent toute nécessité de calage en rotation des pièces mobiles de la prise.

Selon encore un perfectionnement particulièrement important entrant dans le cadre de l'invention, la chemise débouche dans la chambre arrière par un chanfrein à faible pente, et lorsque la chemise elle-même coulisse à son tour dans un appendice du corps, cet appendice débouche à son tour dans la chambre d'admission par un second chanfrein à faible pente.

De tels chanfreins facilitent les mouvements du piston dans la chemise et de celle-ci dans l'appendice mais ils ont pour effet principal de diminuer grandement l'usure au niveau des perçages radiaux et des gorges périphériques et surtout de supprimer pratiquement toute usure des joints. Le joint du piston, qui sort de la chemise et y pénètre à chaque utilisation de la prise, n'aura en effet jamais à passer une zone abrupte mais sera au contraire guidé par le chanfrein de la chemise. Le même avantage se retrouve pour le joint de la chemise chaque fois qu'il aura à sortir de l'appendice ou à y pénétrer.

De préférence, un ressort de compression est interposé entre le fond de la chambre arrière et le fond d'un logement de la tête du piston et un autre ressort de compression est interposé entre le fond de la chambre d'admission et le fond d'un logement de la tête de la chemise lorsque celle-ci coulisse dans un appendice du corps.

On assure ainsi de façon certaine le mouvement des deux pièces mobiles même si la pression du fluide connaît une baisse passagère ou accidentelle et même si pour quelque cause que ce soit ce mouvement se touve freiné ou contrarié.

Deux modes de réalisation de l'invention sont manintenant décrits à titre d'exemple non limitatifs en référence aux dessins annexés dans lesquels:

- la figure 1 représente en coupe longitudinale une prise de type connu en position de fermetures;
- la figure 2 représente la même prise en position d'ouverture;
- la figure 3 représente en coupe longitudinale une prise conforme à l'invention en position d'ouverture;
- la figure 4 représente la prise selon la figure 3 en position de fermeture et,
- la figure 5 représente encore la même prise en position de sécurité, démontée pour son entreintien.

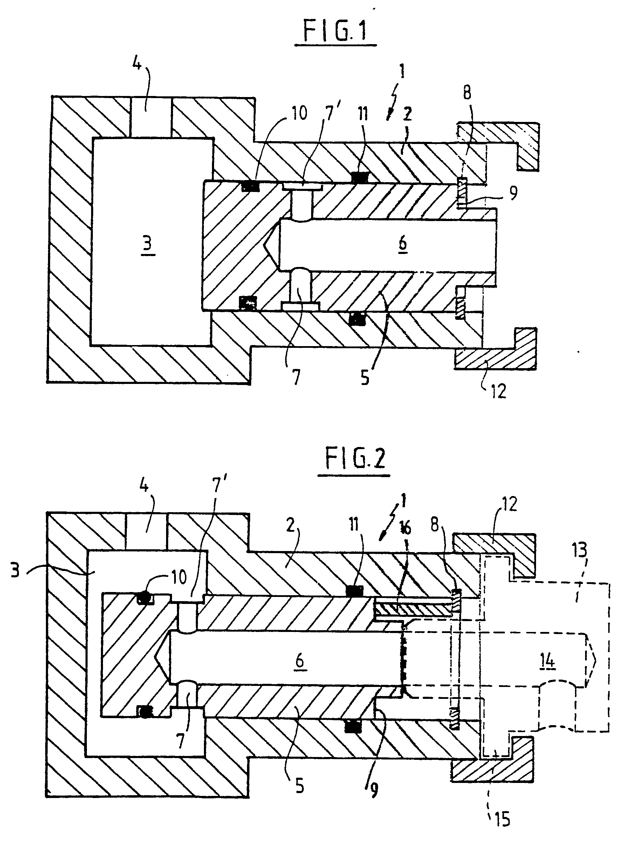

La prise connue illustrée en figure 1 est essentiellement constituée d'un corps de prise 1 formant une chemise cylindrique 2 et une chambre arrière 3 pourvue d'une entrée de fluide 4. Dans la chemise 2 est monté un piston 5 dans lequel ont été percés un trou borgne 6 débouchant à l'avant de la prise c'est-à-dire du côté opposé à la chambre arrière et un certain nombre de passages radiaux 7 faisant communiquer le trou borgne 6 et la périphérie extérieure du piston 5 sur laquelle ils débouchent au droit d'une gorge périphérique 7'. A l'avant de la chemise 2 on a monté dans une gorge convenable de cette chemise un circlips constituant une butée avant 8 qui coopère avec un épaulement 9 du piston. Deux joints d'étanchéité 10 et 11 ont été disposés respectivement, dans des gorges convenables, à l'arrière du piston 5 et dans la partie médiane de la chemise 2. L'ensemble est complété par une bague de blocage 12 montée à l'avant de la chemise 2 de façon connue. On rappelle que de telles bagues sont en général taillées pour ne pouvoir coopérer qu'avec un seul modèle d'embout du type représenté en traits mixtes en 13 a la figure 2. Chaque embout comprend une canalisation 14 formée ici d'un trou borgne venant à la suite du trou borgne 6, et d'un perçage radial apte à être relié au conduit d'acheminement du fluide vers l'appareil d'utilisation. L'embout 13 comprend aussi une couronne 15 de blocage coopérant avec la bague de blocage 12.

Dans la position représentée à la figure 1, la pression du fluide qui pénètre dans la chambre arrière 3 par l'entrée 4 a repoussé le piston 5 jusqu'en position d'appui contre la butée avant 8. C'est la position de fermeture pour laquelle le fluide, grâce aux deux surfaces cylindriques coopérantes de la chemise 2 et du piston 5 et grâce au joint d'étanchéité 10, ne peut en aucune manière atteindre la gorge périphérique 7' et donc ne peut en aucune manière circuler dans la canalisation formée par les perçages radiaux 7 et le trou borgne 6.

On a représenté en figure 2 une cale de blocage 16 que l'utilisateur peut, en repoussant le piston 5, placer entre l'épaulement 9 de ce piston et la butée avant 8.

Cette cale permet d'assurer la circulation du fluide pour pratiquer des essais ou pour permettre le nettoyage puisque dans la position de la figure 2, qui est la position d'ouverture, le fluide qui pénètre dans la chambre arrière 3 peut circuler ensuite dans la canalisation formée par les perçages radiaux 7 et par le trou borgne 6.

Lorsque la cale 16 n'est pas en service l'embout 13 représenté en traits mixtes à la figure 2 peut être introduit dans la prise de telle sorte que sa couronne 15 vienne en prise avec la bague de blocage 12. Il repousse alors le piston 5 dans la même position pour laquelle on voit que le fluide circule depuis l'entrée 4 par la chambre 3, les perçages radiaux 7 le trou borgne 6 et la canalisation 14 jusqu'au circuit d'utilisation, le joint 11 assurant l'étanchéité de la prise.

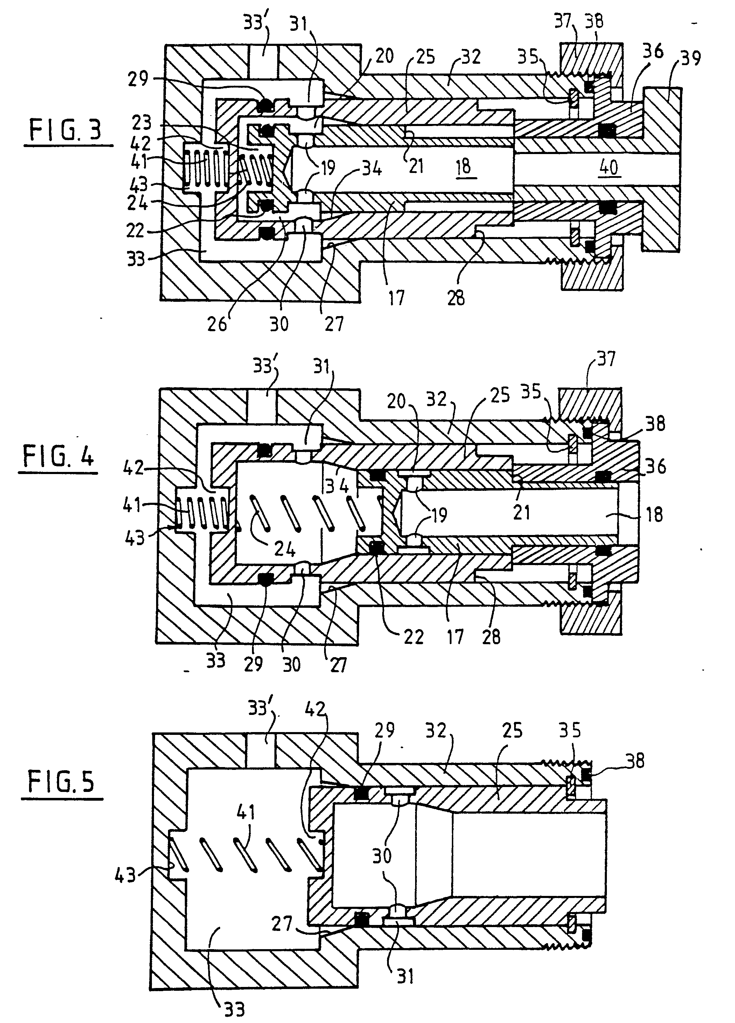

On retrouve dans le mode de réalisation de la prise selon la présente invention illustré aux figures 3, 4 et 5 un piston 17 percé d'un trou borgne 18 et de percages radiaux 19 qui débouchent dans une gorge périphérique 20. Ce piston 17 comprend également un épaulement avant 21, un joint d'étanchéité 22 disposé dans une gorge convenable à l'arrière et un logement 23 permettant de recevoir un ressort de compression 24. Le piston 17 est mobile à l'intérieur d'une chemise 25 pourvue d'une chambre arrière 26, la partie cylindrique de la chemise 25 étant reliée à la paroi de la chambre arrière par un chanfrein à faible pente 27. La chemise 25 est pourvue d'un épaulement avant 28 et, dans une gorge convenable, d'un joint d'étanchéité 29. Elle est bien entendu équipée de perçages radiaux 30 débouchant dans une gorge périphérique 31.

A son tour, la chemise 25 est montée à l'intérieur d'un appendice 32 faisant partie du corps de prise et qui se termine à l'arrière par une chambre d'admission 33 pourvue d'une entrée de fluide 33'. La périphérie interne de l'appendice 32 débouche dans la chambre d'admission par un chanfrein à faible pente 34 semblable au chanfrein 27. L'appendice 32 porte à l'avant successivement un circlips formant butée 35 disposé dans une gorge convenable, puis une douille amovible 36 dont la couronne est bloquée par un écrou 37, avec interposition d'un joint d'étanchéité convenable 38. Pour des raisons de clarté, on n'a pas représenté sur les figures 3 à 5 la bague de blocage classique semblable à la bague 12 représentée aux figures 1 et 2 et qui permet d'introduire et de maintenir un embout de prise 39 et un seul, cet embout comportant ici un perçage axial 40 qui assure la circulation du fluide vers l'appareil d'utilisation.

Dans la position représentée en figure 3, on a mis en place la douille amovible 36 bloquée par l'écrou 37, ce qui a eu pour effet de repousser vers l'arrière la chemise 25 dont les perçages 30 se trouvent ainsi dans la chambre d'admission 33. On a ensuite mis en place et bloque l'embout de prise 39, ce qui a eu pour effet de repousser vers l'arrière le piston 17 dont à leur tour les perçages radiaux 19 se trouvent ainsi dans la chambre arrière 20 de la chemise. On voit que dans une telle position qui est la position d'utilisation, le fluide circule depuis l'entrée de fluide 33' successivement dans la chambre d'admission 33 du corps de prise, puis dans la chambre arrière de la chemise par les perçages radiaux 30, puis dans le trou borgne 18 du piston par les percages radiaux 19, puis enfin dans la canalisation 40 de l'embout de prise 39.

Si l'on cesse d'utiliser la prise, c'est-à-dire si l'on retire l'embout 39, la pression du fluide s'exerçant dans la chambre arrière 26 aidée par le ressort de compression 24 amène le piston 17 dans la position de fermeture représentée en figure 4 pour laquelle l'épaulement 21 du piston bute contre la douille amovible 36. On voit que dans cette position, le fluide sous pression est présent dans la chambre d'admission 33 du corps et dans la chambre arrière 26 de la chemise mais, grâce à la coopération des surfaces cylindriques de la chemise 25 et du piston 17 et grâce surtout au joint d'étanchéité 22, ce fluide sous pression ne peut pas atteindre la gorge périphérique 20 et ne peut donc par circuler dans les perçages radiaux 19 et dans le trou borgne 18.

On aura noté que lors du mouvement qui a amené le piston 17 de sa position selon la figure 3 d'ouverture à sa position selon la figure 4 de fermeture, le joint d'étanchéité 22 a été amené progressivement par le chanfrein 34 à se comprimer sans qu'aucune usure ni détérioration ne soit possible. De même les tranches de la gorge périphérique 20 et de la gorge qui contient le joint 22 sont entrées en contact progressivement avec la chemise 25.

Il convient également de souligner le rôle joué par le joint d'étanchéité 38 lorsque la prise se trouve dans l'une quelconque des positions selon les figures 3 et 4. Des jeux peuvent exister d'une part entre l'appendice 32 et la chemise 25 et d'autre part entre la chemise 25 et le piston 17. Le joint 38 assure l'étanchéité de la prise vers l'extérieur malgré ces jeux.

On se reportera enfin à la figure 5 qui représente la position occupée par la chemise 25 lorsque l'on a démonté l'écrou de blocage 37 et éloigné la douille amovible 36. La chambre d'admission 33, éventuellement assistée par un ressort de compression 41 dont les extrémités sont reçues par un logement 42 prévu dans la paroi de la chambre arrière 26 de la chemise 25 et un logement 43 prévu dans la paroi arrière de la chambre d'admission 33, a amené la chemise 25 à s'appuyer par son épaulement 28 sur la butée de sécurité 35. La fermeture de la prise est assurée puisque la fluide présent dans la chambre d'admission 33 se voit interdire l'accès aux perçages radiaux 30 grâce aux deux surfaces surtout au joint d'étanchéité 29.

Il est possible dans cette position de sécurité de pratiquer la visite, l'entretien et le nettoyage d'une part de l'intérieur de la chemise 25 et d'autre part de toutes les pièces qui ont été éloignées, à savoir la douille amovible 36, le piston 17 et son joint d'étanchéité et le ressort 24.

## Revendications

1. Prise de distribution de fluides composée d'un corps de prise pourvu d'une entrée de fluide (33') et de moyens pour assurer la circulation du fluide entre cette entrée et un embout de prise (39) seulement quand cet embout est introduit dans le corps de prise, qui comprend une chemise (25) dont la chambre arrière (26) peut communiquer avec l'entrée de fluide (34) et dans laquelle coulisse un piston (17) pourvu d'un canal de circulation sous forme d'un trou borgne axial (18) ouvert à l'avant et de perçages radiaux (19) à l'arrière, ce piston étant maintenu par la pression du fluide en position de fermeture, pour laquelle les perçages radiaux sont situés dans la chemise, contre une butée (36), tandis que l'introduction de l'embout de prise (39) le repousse dans sa position d'ouverture pour laquelle les perçages radiaux (19) débouchent dans la chambre arrière (26), caractérisée en ce que la chemise (25) coulisse dans un appendice cylindrique (32) du corps de prise entre une position de sécurité dans laquelle elle est maintenue par la pression du fluide contre une butée de sécurité (35) et une position d'ouverture pour laquelle sa chambre communique par des perçages radiaux (30) avec une chambre d'admission (33) du corps, position d'ouverture dans laquelle elle est maintenue par une douille amovible (36).

2. Prise de distribution de fluides selon la revendication 1, caractérisée en ce que la douille amovible (36) apte à être traversée par l'embout de prise (39) constitue également la butée avant du piston (17).

3. Prise de distribution de fluides selon l'une des revendications 1 et 2, caractérisée en ce que des joints d'étanchéité (22, 29) sont prévus à l'arrière du piston et de la chemise.

4. Prise de distribution de fluides selon l'une des revendications 1 à 3, caractérisée en ce que les perçages radiaux débouchent dans une gorge périphérique (20, 31).

5. Prise de distribution de fluides selon l'une des revendications 1 à 4, caractérisée en ce que la chemise débouche dans la chambre arrière par un chanfrein à faible pente (34).

6. Prise de distribution de fluides selon l'une des revendication 1 à 4, caractérisée en ce que l'appendice du corps débouche dans la chambre d'admission par un chanfrein à faible pente (27).

7. Prise de distribution de fluides selon l'une des revendications 1 à 6, caractérisée en ce qu'un ressort de compression (24) est interposé entre le fond de la chambre arrière et le fond d'un logement (23) de la tête du piston.

8. Prise de distribution de fluides selon l'une des revendications 1 à 6, caractérisée en ce qu'un ressort de compression (41) est interposé entre le fond d'un logement (42) de la chambre arrière (26) de la chemise (25) et le fond d'un logement (43) prévu dans la paroi arrière de la chambre d'admission (33).

**Patentansprüche**

1. Fluidanschlußstelle mit einem Anschlußkörper, der mit einem Fluideinlaß (33') und mit Mitteln versehen ist, um die Fluidströmung zwischen diesem Einlaß und einem Anschlußteil (39) nur dann sicher zu stellen, wenn dieses Anschlußteil in den Anschlußkörper eingeführt ist, und der einen Mantel (25) aufweist, dessen hintere Kammer (26) mit dem Fluideinlaß (33') in Verbindung stehen kann und in dem ein Kolben (17) gleitet, der mit einen Strömungskanal in der Form eines Sacklochs (18) versehen ist, welches vorne offen ist und hinten radiale Bohrungen (19) aufweist, wober dieser Kolben durch den Fluiddruck gegen einen Anschlag (36) in der Schließstellung gehalten ist, in der sich die radialen Bohrungen in dem Mantel befinden, während das Einführen des Anschlußstücks (39) diesen in die Öffnungsstellung zurückdrückt, in der die radialen Bohrungen (19) in die hintere Kammer (26) münden, dadurch gekennzeichnet, daß der Mantel (25) in einem zylindrischen Ansatz (32) des Anschlußkörpers zwischen einer Sicherheitsstellung, in der der Mantel durch den Fluiddruck an einem Sicherheitsanschlag (35) gehalten ist, und eine Offnungsstellung verschiebbar ist, in der seine Kammer mittels radialen Bohrungen (30) mit einer Zuführkammer (33) des Körpers in Verbindung steht, wobei der Mantel in der Öffnungsstellung durch eine entfernbare Büchse (36) gehalten ist.

2. Fluidanschlußstelle nach Anspruch 1, dadurch gekennzeichnet, daß die entfernbare Büchse (36), die von dem Anschlußteil (39) durchquerbar ist, ebenfalls den vorderen Anschlag des Kolbens (17) bildet.

3. Fluidanschlußstelle nach einen der Ansprüche 1 und 2, dadurch gekennzeichnet, daß Dichtungen (22, 29) hinten an dem Kolben und an dem Mantel vorgesehen sind.

4. Fluidanschlußstelle nach einem der Ansprüche 1 bis 3, dadurch gekennzeichnet, daß die radialen Bohrungen in eine Umfangsnut (20, 31) münden.

5. Fluidanschlußstelle nach einem der Ansprüche 1 bis 4, dadurch gekennzeichnet, daß der Mantel in die hintere Kammer mit einer Abfasung (34) geringer Steigung mündet.

6. Fluidanschlußstelle nach einem der Ansprüche 1 bis 4, dadurch gekennzeichnet, daß der Ansatz des Körpers in die Zuführkammer mit einer Abfasung (27) geringer Steigung mündet.

7. Fluidanschlußstelle nach einem der Ansprüche 1 bis 6, dadurch gekennzeichnet, daß eine Druckfeder (24) zwischen dem Boden der hinteren Kammer und dem Boden einer Aufnahme (23) des Kopfes des Kolbens angeordnet ist.

8. Fluidanschußstelle nach einem der Ansprüche 1 bis 6, dadurch gekennzeichnet, daß eine Druckfeder (41) zwischen dem Boden einer Aufnahme (42) der hinteren Kammer (26) des Mantels (25) und dem Boden einer Aufnahme (43) angeordnet ist, die in der hinteren Wand der Zuführkammer (33) vorgesehen ist.

**Claims**

1. Fluid supply connector comprising a connector body provided with a fluid intake (33') and means to assure the circulation of fluid between this intake and a connector tip (39) only when this tip is introduced into the connector body, this body comprising a jacket (25) whose rear chamber (26) can communicate with fluid intake (33') and in which slides a piston (17) provided with a circulation passage in the form of an axial blind hole (is) open at the front and radial bores (19) at the roar, this piston being kept by the pressure of fluid in the closed position, for which the radial bores are located in the jacket, against a stop (36), while introduction of connector tip (39) pushes it in its open position for which radial bores (19) come out in rear chamber (26), characterized in that said jacket (25) slides in a cylindrical lengthening piece (32) of the connector body between a safety position in which it is kept by the pressure of the fluid against a safety stop (35) and an open position for which its chamber communicates by radial bores (30) with an intake chamber (33) of the body, open position in which it is held by a removable sleeve (36).

2. Fluid supply connector according to claim 1, characterized in that said removable sleeve (36), through which connector tip (39) can pass, also constitutes the front stop of piston (17).

3. Fluid supply connector according to one of claims 1 and 2 characterized in that seals (22, 29) are provided at the rear of the piston and jacket.

4. Fluid supply connector according to one of claims 1 to 3, characterized in that the radial bores come out into a peripheral groove (20, 31).

5. Fluid supply connector according to one of claims 1 to 4, characterized in that the jacket comes out in the rear chamber by a bevel with a slight slope (34).

6. Fluid supply connector according to on of claims 1 to 4, characterized in that the lengthening niece of the body comes out in the intake chamber by a bevel with a slight slope (27).

7. Fluid supply connector according to one of claims 1 to 6, characterized in that a compression spring (24) is inserted between the bottom of the rear chamber and the bottom of a seat (23) provided in the piston head.

8. Fluid supply connector according to one of claims 1 to 6, characterized in that a compression spring (41) is inserted between the bottom of a seat (42) provided in rear chamber (26) of jacket (25) and the bottom of a seat (43) provided is the rear wall of intake chamber (33).

## FIG.1

## FIG.2

FIG. 3

FIG. 4

FIG. 5